# EUROPÄISCHE PATENTSCHRIFT

(11) **EP 3 191 212 B1**
(45) Veröffentlichungstag und Bekanntmachung des Hinweises auf die Patenterteilung: **23.01.2019**
(21) Anmeldenummer: 15770826.4
(22) Anmeldetag: 08.09.2015
(51) Int. Cl.: B01D 53/04, B01D 53/06

(54) **VERFAHREN UND REGENERATIVE ABSCHEIDEEINRICHTUNG ZUM ABTRENNEN VON VERUNREINIGUNGEN AUS PROZESSABLUFT**
METHOD AND REGENERATIVE SEPARATING APPARATUS FOR SEPARATING CONTAMINANTS FROM PROCESS EXHAUST AIR
PROCÉDÉ ET DISPOSITIF DE SÉPARATION RÉGÉNÉRATIVE POUR SÉPARER DES IMPURETÉS D`AIR D'ÉVACUATION DE PROCÉDÉ

(30) Priorität: 12.09.2014 DE 102014218344
(43) Veröffentlichungstag der Anmeldung: 19.07.2017
(73) Patentinhaber: Dürr Systems AG, 74321 Bietigheim-Bissingen (DE)
(72) Erfinder: HERM, Enrico, 71159 Mötzingen (DE); RIEDER, Erhard, 71083 Herrenberg (DE); EICHHORN, Christian, 74321 Bietigheim-Bissingen (DE)
(74) Vertreter: Söltenfuss, Dirk Christian
(86) Internationale Anmeldenummer: PCT/EP2015/070456
(87) Internationale Veröffentlichungsnummer: WO 2016/038012

(56) Entgegenhaltungen:
- DE-A1- 3 935 094
- US-B1- 6 328 787

## Beschreibung

Die vorliegende Erfindung betrifft ein Verfahren und eine regenerative Abscheideeinrichtung, insbesondere Filtereinrichtung zum Abtrennen von Verunreinigungen aus Prozessabluft, beispielsweise zum Abtrennen von organischen Lösemitteln aus lösemittelhaltiger Prozessabluft, zum Beispiel für den Einsatz in einer industriellen Oberflächenbehandlungsanlage.

Die Abreinigung von Prozessabluft mit geringer Konzentration oder Beladung an zumindest einer brennbaren Teilkomponente, insbesondere an organischen Lösemitteln, beispielsweise von Lackierabluft wie sie zum Beispiel in Lackieranlagen von Fahrzeugkarosserien anfällt, erfolgt zum Beispiel über ein Verfahren zur Aufkonzentration. Dabei werden die flüchtigen organischen Lösemittel an einer Abscheideeinheit, insbesondere einem Filter einer Abscheideeinrichtung, insbesondere Filtereinrichtung physikalisch angelagert (Adsorption, Absorption). Dieser Vorgang kann durch eine Temperaturerhöhung des Filters umgekehrt werden (Desorption).

Für den Desorptionsvorgang wird beispielsweise Heißluft von 140 bis 450°C mit einem geringen Volumenstrom verwendet. Die aus der Abscheideeinrichtung, insbesondere Filtereinrichtung nach Durchlaufen der Abscheideeinheit, insbesondere des Filters austretende Heißluft wird auch als Konzentratluft bezeichnet. Die Lösemittelkonzentration in der Konzentratluft erhöht sich im Vergleich zur Prozessluft im gleichen Verhältnis wie der Volumenstrom reduziert ist. Mit herkömmlichen Systemen lassen sich so Konzentrationserhöhungen in der Konzentratluft im Verhältnis von 2:1 bis 20:1 gegenüber der Prozessabluft erzielen. Die Grenzen dieser Aufkonzentration ergeben sich aus dem Erreichen einer unteren Explosionsgrenze und einem Überschreiten der Zündtemperatur. Die Konzentratluft kann schließlich einer Reinigungseinrichtung zugeführt werden, um die Lösemittel zu extrahieren bzw. rückzugewinnen.

Ein solches Verfahren zum Abtrennen von organischen Lösemitteln aus lösemittelhaltiger Prozessabluft ist zum Beispiel in der DE 39 35 094 C2 offenbart. Bei diesem herkömmlichen Verfahren wird eine kontinuierlich betriebene Abscheideeinrichtung, insbesondere Filtereinrichtung mit einer als Rotor ausgestalteten Abscheideeinheit, insbesondere Filter eingesetzt, dessen Stirnflächen fortlaufend mit Prozessabluft und Heißluft beaufschlagt werden. Dabei ist die Abscheideeinrichtung, insbesondere Filtereinrichtung in eine sektorförmige Abscheidezone und eine sektorförmige Regenerationszone unterteilt, die von der rotierenden Abscheideeinheit, insbesondere dem rotierenden Filter fortlaufend nacheinander durchlaufen werden.

Da sich der in die Regenerationszone eintretende Bereich des Filters zunächst noch auf dem Temperaturniveau des Anlagerungsprozesses von zum Beispiel etwa 10 bis 60°C befindet und von der Heißluft erst auf zum Beispiel etwa 140 bis 450°C aufgeheizt werden muss, reichen die Temperaturen des Filters in einer ersten Phase des Regenerationsprozesses nicht aus, die angelagerten Lösemittel im ersten Filterteilbereich zu desorbieren. Dies kann dazu führen, dass die Lösemittelkonzentration in der Konzentratluft und die Effizienz der nachgeschalteten Reinigungseinrichtung unzureichend bzw. vermindert sind.

Die US 6,328,787 B1 offenbart eine Vorrichtung und ein Verfahren zum Behandeln von Gas, bei denen ein Honigwabenrotor benutzt wird, der drehbar in einem Gehäuse mit einer Adsorptionszone und mehreren Desorptionszonen angeordnet ist. Die aus den verschiedenen Desorptionszonen austretenden Gasströme werden unterschiedlich weitergeleitet.

Der Erfindung liegt die Aufgabe zugrunde, ein Verfahren und eine regenerative Abscheideeinrichtung, insbesondere Filtereinrichtung zum Abtrennen von Verunreinigungen aus Prozessabluft zu schaffen, welche eine höhere Effizienz ermöglichen.

Diese Aufgabe wird gelöst durch die Lehre der unabhängigen Ansprüche. Besonders bevorzugte Ausgestaltungen der Erfindung sind Gegenstand der abhängigen Ansprüche.

Das erfindungsgemäße Verfahren zum Abtrennen von Verunreinigungen aus Prozessabluft enthält die Schritte des Leitens der Prozessabluft durch eine Abscheideeinrichtung, insbesondere Filtereinrichtung hindurch; des Regenerierens der Abscheideeinrichtung, insbesondere Filtereinrichtung durch Hindurchleiten eines Regenerationsstroms; des Trennens des beim Regenerieren durch die Abscheideeinrichtung, insbesondere Filtereinrichtung hindurch geströmten Regenerationsstroms in einen ersten Teilstrom, der eine Verunreinigungskonzentration kleiner als ein erster vorbestimmter Grenzwert aufweist, und einen zweiten Teilstrom, der eine Verunreinigungskonzentration gleich oder größer als ein zweiter vorbestimmter Grenzwert aufweist, wobei der zweite vorbestimmte Grenzwert gleich oder größer als der erste vorbestimmte Grenzwert ist; des Rückführens des beim Regenerieren erzeugten ersten Teilstroms stromauf der Abscheideeinrichtung, insbesondere Filtereinrichtung in die Prozessabluft; und des Leitens des beim Regenerieren erzeugten zweiten Teilstroms zu einer Reinigungseinrichtung, wobei eine Strömungsmenge des beim Regenerieren erzeugten ersten Teilstroms und/oder ein Verhältnis der Strömungsmenge des beim Regenerieren erzeugten ersten Teilstroms zur Strömungsmenge des beim Regenerieren erzeugten zweiten Teilstroms variabel geregelt werden.

Bei diesem Verfahren wird ein Teil des Regenerationsstroms, der eine vergleichsweise geringe Konzentration an Verunreinigungen aufweist, als erster Teilstrom abgetrennt ("Splitstrom") und zur Abscheideeinrichtung, insbesondere Filtereinrichtung rückgeführt. Durch die damit erreichte Aufkonzentration der Verunreinigungen im zweiten Teilstrom ("Konzentratstrom") des Regenerationsstroms kann die Effizienz der Reinigungseinrichtung, welcher der zweite Teilstrom zugeleitet wird, erhöht werden. Ferner können durch die Rückführung des ersten Teilstroms zurück zur Abscheideeinrichtung, insbesondere Filtereinrichtung die Konzentration der Verunreinigungen in der Abscheideeinrichtung, insbesondere Filtereinrichtung und damit auch die Aufkonzentration im zweiten Teilstrom des Regenerationsstroms erhöht werden, sodass die Effizienz der Reinigungseinrichtung insgesamt verbessert werden kann. Mit dem erfindungsgemäßen Verfahren können hohe Aufkonzentrationen bzw. Aufkonzentrationsfaktoren erreicht werden, die üblicherweise nur mit zweistufigen Filtereinrichtungen erzielbar sind (z. B. bis zu 40:1 und mehr).

Aufgrund der hohen Aufkonzentrationen bzw. Aufkonzentrationsfaktoren eignet sich das erfindungsgemäße Verfahren insbesondere zum Abreinigen von Prozessabluft mit geringer Konzentration oder Beladung von Verunreinigungen. Das Verfahren ist aber ebenso in vorteilhafter Weise geeignet für Prozessabluftströme mit höheren Konzentrationen von Verunreinigungen, insbesondere brennbaren Teilkomponenten, bei deren Aufkonzentrierung die sich im zweiten Teilstrom ergebenden Konzentrationen über der unteren Explosionsgrenze (UEG) von zum Beispiel 25% liegen. Dieser zweite Teilstrom kann dann bevorzugt direkt ohne Zusatzeinrichtungen in einer einfachen Reinigungseinrichtung wie z. B. einer (atmosphärischen) Fackel oder einem geeigneten Spaltbrenner gereinigt werden. Bei dieser Anwendung erhöht die Abtrennung des ersten Teilstroms die Verunreinigungskonzentration im zweiten Teilstrom, sodass die Effizienz z. B. der Fackel verbessert werden kann.

Der erste Teilstrom mit der geringeren Verunreinigungskonzentration entsteht zum Beispiel während einer ersten bzw. frühen Phase des Regenerierens der Abscheideeinrichtung, insbesondere Filtereinrichtung, wenn sich die Abscheideeinrichtung, insbesondere Filtereinrichtung noch auf einem niedrigen Temperaturniveau befindet und sich deshalb nur wenige Verunreinigungen von der Abscheideeinheit, insbesondere dem Filter lösen. In diesem Fall hat der erste Teilstrom nicht nur eine relativ geringe Verunreinigungskonzentration, sondern auch eine niedrigere Temperatur. Andererseits entsteht der zweite Teilstrom zum Beispiel während einer zweiten Phase des Regenerierens der Abscheideeinrichtung, insbesondere Filtereinrichtung, wenn die Abscheideeinrichtung, insbesondere Filtereinrichtung ein höheres Temperaturniveau erreicht hat. In diesem Fall hat der zweite Teilstrom nicht nur eine höhere Verunreinigungskonzentration, sondern auch eine höhere Temperatur. Andererseits kann der zweite Teilstrom mit der höheren Verunreinigungskonzentration auch bereits in einer frühen Phase des Regenerierens erzeugt werden, falls zum Beispiel eine sehr schnelle Aufheizung der Abscheideeinrichtung, insbesondere Filtereinrichtung erfolgt, und kann in diesem Fall der erste Teilstrom mit der niedrigeren Verunreinigungskonzentration in einer späten Phase des Regenerierens erzeugt werden, falls zum Beispiel eine (längere) Abkühlphase für die Abscheideeinrichtung, insbesondere Filtereinrichtung benötigt wird. In beiden Varianten kann durch die höhere Temperatur des der Reinigungseinrichtung zugeführten zweiten Teilstroms deren Effizienz gesteigert werden. Ggf. kann die Reinigungseinrichtung autotherm (d.h. ohne zusätzliche Energiezufuhr) oder sogar mit Energieüberschuss betrieben werden, wodurch der Energiebedarf der gesamten Anlage optimiert werden kann.

Durch das Abtrennen und Rückführen des ersten Teilstroms kann insgesamt eine zeitliche Integration eines möglicherweise variablen Volumenstroms des Regenerationsstroms bei gegebener, möglicherweise selbst auch zeitlich fluktuierender Verunreinigungskonzentration der Prozessabluft über ein gegebenes, ggf. variierbares Zeitintervall während der Aufkonzentrationsphase und einer in zwei Teilphasen gesplitteten Regenerationsphase erzielt werden. Die Regenerationsphase zeichnet sich dabei durch einen reduzierten Volumenstrom aus, während sich die Teilphasen insbesondere hinsichtlich ihrer jeweiligen Verunreinigungskonzentration unterscheiden.

Die Erfindung kann grundsätzlich in allen Fällen der Reinigung von mit oxidationsfähigen Schadstoffen belasteten Abgasen / Ablüften vorteilhaft eingesetzt werden, insbesondere bei niedrigen Schadstoffkonzentrationen. Unter dem Begriff Prozessabluft soll in diesem Zusammenhang insbesondere ein Abgas und/oder eine Abluft zumindest eines vorgelagerten Prozesses bzw. einer vorgelagerten Quelle verstanden werden, das/die eine Beladung oder Konzentration von Verunreinigungen beinhaltet. Bei den Verunreinigungen handelt es sich beispielsweise um zumindest eine brennbare Teilkomponente wie zum Beispiel einen flüchtigen organischen Bestandteil (VOC) des Abgases oder der Abluft. Bei der Prozessabluft kann es sich insbesondere um eine lösemittelhaltige Prozessabluft handeln, welche eine Beladung / Konzentration eines organischen Lösemittels aufweist (z. B. Lackierindustrie). Daneben kann es sich bei der Prozessabluft auch um Minengase (d. h. VAM = ventilation air methane), nicht anderweitig aufkonzentrierbare Ablüfte aus Biogas- oder Müllverbrennungsanlagen, mit geringen Mengen an VOC belastete Luft aus Druckereien oder kunststoffverarbeitenden Betrieben, und dergleichen mehr handeln.

Die Abscheideeinrichtung, insbesondere Filtereinrichtung weist vorzugsweise eine Abscheideeinheit, insbesondere einen Filter auf, an der sich die in der Prozessabluft enthaltenen Verunreinigungen (z. B. organische Lösemittel) beim Durchströmen physikalisch anlagern können. Die Abscheideeinheit ist vorzugsweise als ein Adsorptionsfilter, ein Absorptionsfilter oder dergleichen ausgestaltet. Die Abscheideeinheit, insbesondere der Filter enthält zu diesem Zweck vorzugsweise Aktivkohle, Zeolith oder ein anderes geeignetes Filtermaterial.

Bei dem Regenerationsstrom handelt es sich vorzugsweise um Heißluft, bevorzugt in einem Temperaturbereich von etwa 140 bis 450°C. Vorzugsweise durchströmt der Regenerationsstrom die Abscheideeinrichtung, insbesondere Filtereinrichtung bzw. deren Abscheideeinheit, insbesondere Filter in einer Richtung entgegengesetzt zu der Richtung, in welcher die Prozessabluft durch die Abscheideeinrichtung, insbesondere Filtereinrichtung geleitet wird.

Der Begriff Konzentration soll in diesem Zusammenhang jede Art einer auf das Volumen eines Gemisches bezogenen Gehaltsangabe bezeichnen (DIN 1310). Der Begriff Konzentration umfasst daher in diesem Zusammenhang insbesondere eine Stoffmengenkonzentration (Molarität), eine Äquivalentkonzentration (Normalität), eine Massenkonzentration, eine Volumenkonzentration und eine Partikelkonzentration (Teilchendichte).

Der erste Teilstrom des Regenerationsstroms weist eine Verunreinigungskonzentration kleiner als ein erster vorbestimmter Grenzwert, d. h. eine relativ geringe verunreinigungskonzentration auf. Der erste vorbestimmte Grenzwert ist bevorzugt so gewählt, dass die Verunreinigungskonzentration des ersten Teilstroms maximal jener der Prozessabluft ist. Der zweite Teilstrom des Regenerationsstroms weist eine Verunreinigungskonzentration gleich oder größer als ein zweiter vorbestimmter Grenzwert, d.h. eine mittlere oder höhere Verunreinigungskonzentration auf. Der zweite vorbestimmte Grenzwert ist bevorzugt so gewählt, dass die Verunreinigungskonzentration des zweiten Teilstroms jene der Prozessabluft übersteigt.

In einer bevorzugten Ausführung des erfindungsgemäßen Verfahrens bzw. der erfindungsgemäßen Abscheideeinrichtung, insbesondere Filtereinrichtung wird eine Eingangskonzentration oder Beladung der eingehenden Prozessabluft an Verunreinigungen, insbesondere zumindest einer brennbaren Teilkomponente wie zum Beispiel einem flüchtigen organischen Bestandteil (VOC) beim Durchtritt durch die Abscheideeinrichtung, insbesondere Filtereinrichtung derart abgesenkt, dass eine Ausgangskonzentration in der ausgehenden Prozessabluft zumindest die gesetzlichen oder normativen Erfordernisse hinsichtlich dieser Verunreinigungen für die Emission der Prozessabluft in die Umgebung erfüllt oder zumindest nicht mehr als störend in der Umgebung wahrgenommen werden kann, für den Fall dass keine gesetzlichen Erfordernisse für die entsprechende Art von Verunreinigung einzuhalten wären.

In einer besonders bevorzugten Variante ist der erste vorbestimmte Grenzwert einer Verunreinigungskonzentration im ersten Teilstrom des Regenerationsstroms geringer als die Eingangskonzentration in der eingehenden Prozessabluft. Weiters kann vorzugsweise der zweite vorbestimmte Grenzwert einer Verunreinigungskonzentration im zweiten Teilstrom des Regenerationsstroms höher als die Eingangskonzentration in der eingehenden Prozessabluft sein, insbesondere kann ein Verhältnis des zweiten Grenzwerts der Verunreinigungskonzentration im zweiten Teilstrom oder zumindest der Verunreinigungskonzentration im zweiten Teilstrom selbst bezogen auf die Eingangskonzentration zwischen 2:1 und 40:1, vorzugsweise zwischen 10:1 und 30:1, bevorzugt von mindestens 20:1 betragen.

Die Reinigungseinrichtung ist in diesem Zusammenhang eine Einrichtung, die geeignet ist, die Verunreinigungen aus dem zweiten Teilstrom des Regenerationsstroms zu extrahieren oder rückzugewinnen. Die Reinigungseinrichtung ist vorzugsweise ausgestaltet zur regenerativen thermischen Oxidation (RTO), direkten thermischen Oxidation (TO), rekuperativen katalytischen Oxidation (CO), regenerativen katalytischen Oxidation (RCO), Kondensation oder dergleichen oder weist ein Gasturbinenaggregat mit einer Verbrennungsanlage zum Verbrennen des zweiten Teilstroms bzw. der in ihm enthaltenen brennbaren Verunreinigungen auf. Der Regenerationsstrom kann mit dem zweiten Teilstrom und der Reinigungseinrichtung wahlweise einen geschlossenen oder einen offenen Regenerationskreis bilden.

Bei dem Gasturbinenaggregat handelt es sich vorzugsweise um ein Mikrogasturbinenaggregat wie es zum Beispiel in der DE 10 2013 203 448 A1 offenbart ist. Gemäß der Erfindung wird eine Strömungsmenge des beim Regenerieren erzeugten ersten Teilstroms variabel geregelt und/oder wird ein Verhältnis der Strömungsmenge des beim Regenerieren erzeugten ersten Teilstroms zur Strömungsmenge des beim Regenerieren erzeugten zweiten Teilstroms variabel geregelt. Auf diese Weise können die Aufkonzentration und die Temperatur des zweiten Teilstroms des Regenerationsstroms optimiert und so die Effizienz der Reinigungseinrichtung erhöht werden. Vorzugsweise werden die Strömungsmenge bzw. das Strömungsmengenverhältnis des ersten Teilstroms des Regenerationsstroms so geregelt, dass die Reinigungseinrichtung autotherm, d. h. ohne zusätzliche Energiezufuhr betrieben werden kann. Vorzugsweise erfolgt die Regelung des ersten Teilstroms in Abhängigkeit von einer Temperatur des ersten Teilstroms, einer Verunreinigungskonzentration des ersten Teilstroms, einer Temperatur des zweiten Teilstroms, einer Verunreinigungskonzentration des zweiten Teilstroms, einer Temperatur der Prozessabluft, einer verunreinigungskonzentration der Prozessabluft, einem Strömungsvolumen der Prozessabluft, einer Temperatur des Regenerationsstroms, einem Strömungsvolumen des Regenerationsstroms und/oder einer Energiebilanz der Reinigungseinrichtung.

Gemäß der Erfindung wird der beim Regenerieren erzeugte erste Teilstrom der Prozessabluft stromauf der Abscheideeinrichtung, insbesondere Filtereinrichtung zugeleitet. Auf diese Weise können die Verunreinigungskonzentration der Prozessabluft und damit auch des zweiten Teilstroms erhöht werden, sodass die Effizienz der Reinigungseinrichtung weiter verbessert werden kann.

In einer bevorzugten Ausgestaltung der Erfindung wird die Abscheideeinrichtung, insbesondere Filtereinrichtung zwischen dem Regenerieren und einem nächsten Abreinigen der Prozessabluft mittels eines Kühlluftstroms gekühlt. Nach einem Regenerationsvorgang ist es von Vorteil, die Abscheideeinrichtung, insbesondere Filtereinrichtung von den zum Regenerieren erhöhten Temperaturen wieder auf einen zum Anlagern der Verunreinigungen geeigneten Temperaturbereich abzukühlen.

Bei dieser Ausgestaltung kann der beim Regenerieren erzeugte erste Teilstrom vorzugsweise auch dem Kühlluftstrom stromauf der Abscheideeinrichtung, insbesondere Filtereinrichtung zugeleitet werden. Auf diese Weise können die Verunreinigungskonzentration in der Abscheideeinrichtung, insbesondere Filtereinrichtung und damit auch des zweiten Teilstroms erhöht werden, sodass die Effizienz der Reinigungseinrichtung weiter verbessert werden kann.

In einer weiteren bevorzugten Ausgestaltung der Erfindung wird von dem beim Regenerieren erzeugten zweiten Teilstrom ein weiterer Teilstrom abgezweigt und zur Abscheideeinrichtung, insbesondere Filtereinrichtung rückgeführt. Dieser abgezweigte weitere Teilstrom wird vorzugsweise dem ersten Teilstrom, der Prozessabluft und/oder dem Regenerationsstrom zugeleitet. Auf diese Weise können die Verunreinigungskonzentration in der Abscheideeinrichtung, insbesondere Filtereinrichtung und damit auch des zweiten Teilstroms weiter erhöht werden, sodass die Effizienz der Reinigungseinrichtung noch weiter gesteigert werden kann.

In einer noch weiteren bevorzugten Ausgestaltung der Erfindung wird die Abscheideeinrichtung, insbesondere Filtereinrichtung kontinuierlich betrieben. Vorzugsweise weist die Abscheideeinrichtung, insbesondere Filtereinrichtung hierzu eine rotierende (z.B. scheibenförmige) Abscheideeinheit, insbesondere Filter auf, die fortlaufend nacheinander die Bereiche der Abscheideeinrichtung, insbesondere Filtereinrichtung zum Filtern, Regenerieren und ggf. Kühlen durchläuft.

Die regenerative Abscheideeinrichtung, insbesondere Filtereinrichtung zum Abtrennen von Verunreinigungen aus Prozessabluft weist gemäß der Erfindung auf: einen Anschluss zum Einleiten von Prozessabluft; eine Abscheideeinheit, insbesondere einen Filter zum Aufnehmen der Verunreinigungen aus der in die Abscheideeinrichtung, insbesondere Filtereinrichtung eingeleiteten Prozessabluft; einen Anschluss zum Ausleiten von Reinluft; einen Anschluss zum Einleiten eines Regenerationsstroms; eine Trenneinrichtung zum Trennen des durch die Abscheideeinheit, insbesondere den Filter hindurch geströmten Regenerationsstroms in einen ersten Teilstrom, der eine Verunreinigungskonzentration kleiner als ein erster vorbestimmter Grenzwert aufweist, und einen zweiten Teilstrom, der eine Verunreinigungskonzentration gleich oder größer als ein zweiter vorbestimmter Grenzwert aufweist, wobei der zweite vorbestimmte Grenzwert gleich oder größer als der erste vorbestimmte Grenzwert ist; einen Anschluss zum Ausleiten des ersten Teilstroms; eine Strömungsleitung zum Rückführen des bei einem Regenerationsvorgang erzeugten ersten Teilstroms stromauf des Anschlusses zum Einleiten einer Prozessabluft in die Prozessabluft; und einen Anschluss zum Ausleiten des zweiten Teilstroms, wobei die Trennvorrichtung ausgestaltet ist, um eine Strömungsmenge des ersten Teilstroms variabel zu regeln.

Bezüglich der mit dieser Abscheideeinrichtung, insbesondere Filtereinrichtung erzielbaren Vorteile und der Begriffsdefinitionen wird auf die obigen Erläuterungen in Zusammenhang mit dem erfindungsgemäßen Verfahren verwiesen, die für die Abscheideeinrichtung, insbesondere Filtereinrichtung entsprechend gelten. Gemäß der Erfindung ist die Trennvorrichtung derart ausgestaltet, dass sie eine Strömungsmenge des ersten Teilstroms variabel regeln kann. Vorzugsweise ist die Trennvorrichtung so ausgestaltet, dass sie ein Verhältnis der Strömungsmenge des beim Regenerieren erzeugten ersten Teilstroms zur Strömungsmenge des beim Regenerieren erzeugten zweiten Teilstroms variabel regeln kann. Die Trennvorrichtung weist zu diesem Zweck bevorzugt eine verstellbare Trennwand, einen verstellbaren Strömungsregler oder dergleichen auf.

In einer bevorzugten Ausgestaltung der Erfindung ist die Abscheideeinheit, insbesondere der Filter als ein Rotor ausgestaltet, dessen Stirnseiten fortlaufend mit der Prozessabluft und dem Regenerationsstrom beaufschlagt werden kann. Die Abscheideeinheit, insbesondere der Filter ist bevorzugt scheibenförmig ausgebildet. Die Achslage des Rotors ist grundsätzlich frei wählbar, bevorzugt im Wesentlichen horizontal oder im Wesentlichen vertikal.

Bei dieser Ausgestaltung weist die Abscheideeinrichtung, insbesondere Filtereinrichtung vorzugsweise eine sektorförmige Abscheide- oder Filterzone und eine sektorförmige Regenerationszone auf, wobei die Abscheidezone und die Regenerationszone einander nicht überlappen. Die Abscheidezone steht bevorzugt mit dem Anschluss zum Einleiten von Prozessabluft und dem Anschluss zum Ausleiten von Reinluft in Verbindung. Die Regenerationszone steht bevorzugt mit dem Anschluss zum Einleiten eines Regenerationsstroms, dem Anschluss zum Ausleiten des ersten Teilstroms und dem Anschluss zum Ausleiten des zweiten Teilstroms in Verbindung. Das Verhältnis der Fläche der Regenerationszone zur Fläche der Abscheidezone liegt vorzugsweise in einem Bereich von etwa 5% bis etwa 25%, bevorzugter von etwa 10% bis etwa 15%.

Außerdem ist bei dieser Ausgestaltung vorzugsweise vorgesehen, dass die Trennvorrichtung die Regenerationszone in einer Drehrichtung der Abscheideeinheit, insbesondere des Filters in eine erste Teilzone und eine zweite Teilzone unterteilt. Die erste Teilzone der Regenerationszone steht bevorzugt mit dem Anschluss zum Einleiten eines Regenerationsstroms und dem Anschluss zum Ausleiten des ersten Teilstroms in Verbindung, und die zweite Teilzone steht bevorzugt mit dem Anschluss zum Einleiten eines Regenerationsstroms und dem Anschluss zum Ausleiten des zweiten Teilstroms in Verbindung. Das Flächenverhältnis der ersten Teilzone zur zweiten Teilzone ist vorzugsweise durch die Trennvorrichtung variabel einstellbar. Die Fläche der ersten Teilzone beträgt vorzugsweise maximal etwa 40%, bevorzugter maximal etwa 30% oder maximal etwa 20% der Fläche der Regenerationszone.

In einer weiteren bevorzugten Ausgestaltung der Erfindung weist die Abscheideeinrichtung, insbesondere Filtereinrichtung ferner einen Anschluss zum Einleiten eines Kühlluftstroms und einen Anschluss zum Ausleiten des Kühlluftstroms nach Durchströmen der Abscheideeinheit, insbesondere des Filters auf.

Bei dieser Ausgestaltung weist die Abscheideeinrichtung, insbesondere Filtereinrichtung vorzugsweise eine sektorförmige Kühlzone auf, die in einer Drehrichtung der Abscheideeinheit, insbesondere des Filters zwischen der Regenerationszone und der Abscheidezone angeordnet ist. Diese Kühlzone steht bevorzugt mit dem Anschluss zum Einleiten eines Kühlluftstroms und dem Anschluss zum Ausleiten des Kühlluftstroms nach Durchströmen der Abscheideeinheit, insbesondere des Filters in Verbindung.

Gegenstand der vorliegenden Erfindung ist ferner eine Anlage zum Abtrennen von Verunreinigungen aus Prozessabluft, beispielsweise zum Abtrennen von organischen Lösemitteln aus lösemittelhaltiger Prozessabluft, welche eine oben beschriebene regenerative Abscheideeinrichtung, insbesondere Filtereinrichtung gemäß der Erfindung sowie eine Reinigungseinrichtung zum Extrahieren bzw. Rückgewinnen der Verunreinigungen aus dem bei einem Regenerationsvorgang der Abscheideeinrichtung, insbesondere Filtereinrichtung erzeugten zweiten Teilstrom aufweist. Diese Anlage ist insbesondere auch zur Durchführung des oben beschriebenen Verfahrens gemäß der Erfindung geeignet.

Gemäß der Erfindung weist die Anlage bzw. die Abscheideeinrichtung ferner eine Strömungsleitung zum Rückführen des bei einem Regenerationsvorgang erzeugten ersten Teilstroms stromauf der Abscheideeinrichtung, insbesondere Filtereinrichtung in die Prozessabluft auf. Die Strömungsleitung ist vorzugsweise ausgestaltet und angeordnet, um den ersten Teilstrom in die Prozessabluft, in den Kühlluftstrom und/oder in die Abscheide/Filterzone der Abscheideeinrichtung, insbesondere Filtereinrichtung einzuleiten.

In einer weiteren bevorzugten Ausgestaltung der Erfindung weist die Anlage zudem einen Strömungsregler zum Abzweigen eines weiteren Teilstroms von dem bei einem Regenerationsvorgang erzeugten zweiten Teilstrom und wenigstens eine weitere Strömungsleitung zum Rückführen des weiteren Teilstroms zur Abscheideeinrichtung, insbesondere Filtereinrichtung auf. Der Strömungsregler weist vorzugsweise ein Mehrwegeventil, eine Strömungsweiche oder dergleichen auf. Die weitere Strömungsleitung ist vorzugsweise ausgestaltet und angeordnet, um den abgezweigten weiteren Teilstrom in den Regenerationsstrom, in den ersten Teilstrom und/oder in die Prozessabluft einzuleiten.

Das oben beschriebene Verfahren der Erfindung, die oben beschriebene regenerative Abscheideeinrichtung, insbesondere Filtereinrichtung der Erfindung und die oben beschriebene Anlage der Erfindung sind in besonders vorteilhafter Weise in industriellen Oberflächenbehandlungsanlagen zum Behandeln einer Oberfläche eines Werkstücks einsetzbar. Vorzugsweise sind sie in Lackieranlagen zum Lackieren von Fahrzeugteilen wie insbesondere Fahrzeugkarosserien einsetzbar, in denen die organischen Lösemittel aus der Lackierabluft abgetrennt werden sollen. Darüber hinaus ist die vorliegende Erfindung in allen Fällen der Reinigung von mit oxidationsfähigen Schadstoffen belasteten Abgasen / Ablüften in vorteilhafter Weise einsetzbar, wir für Minengas, nicht anderweitig aufkonzentrierbare Ablüfte aus Biogas- oder Müllverbrennungsanlagen, mit geringen Mengen an VOC belastete Luft aus Druckereien oder kunststoffverarbeitenden Betrieben, und dergleichen.

Obige sowie weitere Vorteile, Merkmale und Anwendungsmöglichkeiten der Erfindung werden aus der nachfolgenden Beschreibung von verschiedenen Ausführungsbeispielen anhand der beiliegenden Zeichnungen besser verständlich. Darin zeigen, größtenteils schematisch:
- Fig. 1: den Aufbau einer Anlage gemäß einem Ausführungsbeispiel der Erfindung in verschiedenen Varianten;
- Fig. 2: eine vereinfachte Darstellung eines als Rotor ausgestalteten Filters einer erfindungsgemäßen Abscheideeinrichtung, insbesondere Filtereinrichtung gemäß einem bevorzugten Ausführungsbeispiel;
- Fig. 3: eine vereinfachte Darstellung einer Trennvorrichtung einer erfindungsgemäßen Abscheideeinrichtung, insbesondere Filtereinrichtung gemäß einem bevorzugten Ausführungsbeispiel;
- Fig. 4: den Aufbau einer Reinigungseinrichtung mit einem Gasturbinenaggregat; und
- Fig. 5: eine vereinfachte Darstellung einer Trennvorrichtung einer erfindungsgemäßen Abscheideeinrichtung, insbesondere Filtereinrichtung gemäß einem weiteren bevorzugten Ausführungsbeispiel.

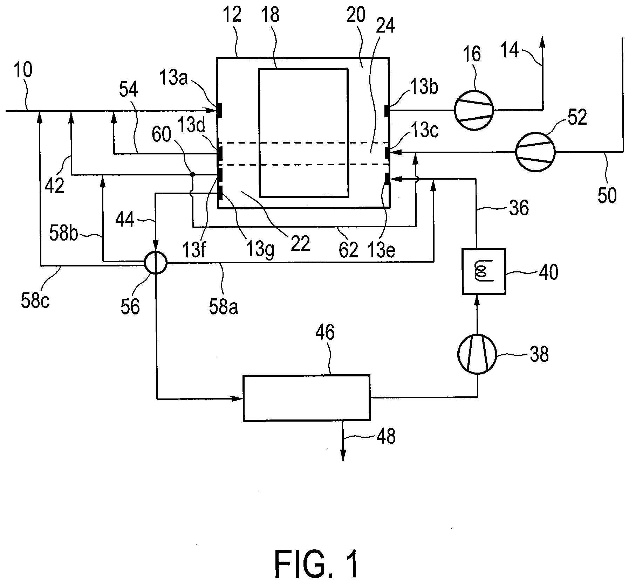

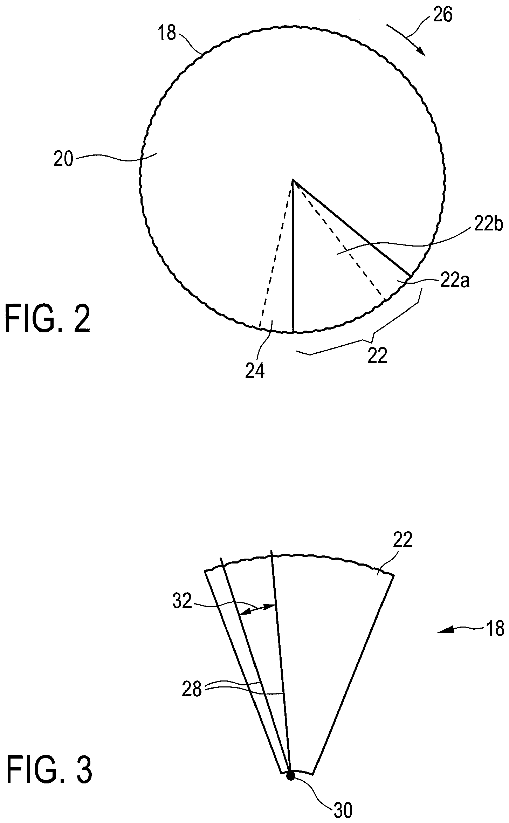

Bezug nehmend auf Fig. 1 werden verschiedene Varianten des Aufbaus einer erfindungsgemäßen Anlage zum Abtrennen von Verunreinigungen aus Prozessabluft näher erläutert. Bezug nehmend auf Fig. 2 und 3 werden Aufbau und Funktionsweise der Abscheideeinrichtung, insbesondere Filtereinrichtung einer solchen Anlage näher beschrieben.

Zum Abtrennen von Verunreinigungen (z. B. organischen Lösemitteln) wird die Prozessabluft (z. B. lösemittelhaltige Lackierabluft) 10 einer Abscheideeinrichtung 12 über einen Anschluss 13a zugeleitet. Die in der Abscheideeinrichtung gereinigte Prozessabluft wird über einen Anschluss 13b ausgeleitet und mittels eines Gebläses 16 als so genannte Reinluft 14 zum Beispiel in die Umgebung abgegeben oder wieder dem Prozess rückgeführt.

Die Abscheideeinrichtung 12 weist eine Abscheideeinheit 18, insbesondere einen Filter auf, an den sich die in der Prozessabluft 10 enthaltenen Verunreinigungen beim Durchströmen der Abscheideeinrichtung 12 anlagern. Die Abscheideeinheit 18 der Abscheideeinrichtung 12 ist zum Beispiel als ein Adsorptionsfilter, ein Absorptionsfilter oder dergleichen ausgebildet und weist zum Beispiel Aktivkohle als Filtermaterial auf. Die Abscheideeinheit 18 kann mittels erhöhter Temperaturen zum Durchführen zum Beispiel eines Desorptionsvorganges regeneriert werden.

Wie in Fig. 2 angedeutet, ist die Abscheideeinheit 18 in diesem Ausführungsbeispiel als ein scheibenförmiger Rotor ausgestaltet. Die Abscheideeinrichtung 12 weist eine Abscheidezone 20 und eine Regenerationszone 22 auf, welche jeweils sektorförmig ausgestaltet sind, wobei die Fläche der Regenerationszone 22 deutlich kleiner bemessen ist als die Fläche der Abscheidezone 20. Der scheibenförmige Rotor hat vorzugsweise eine im Wesentlichen horizontale oder im Wesentlichen vertikale Achslage.

Die Abscheideeinrichtung 12 wird kontinuierlich betrieben. D. h. die Abscheideeinheit 18 durchläuft fortlaufend nacheinander die Abscheidezone 20 und die Regenerationszone 22 in einer Drehrichtung 26.

Wie in Fig. 2 dargestellt, ist die Regenerationszone 22 in der Drehrichtung 26 der Abscheideeinheit 18 in eine erste Teilzone 22a und eine zweite Teilzone 22b unterteilt. Die Fläche der ersten Teilzone 22a ist dabei deutlich kleiner bemessen als die Fläche der zweiten Teilzone 22b. Wie in Fig. 3 veranschaulicht, erfolgt eine Trennung zwischen der ersten und der zweiten Teilzone 22a, 22b mit Hilfe einer Trennvorrichtung 28 in Form einer Trennwand. Diese Trennvorrichtung 28 ist an einer Lagerung 30 über einen vorbestimmten Schwenkbereich 32 schwenkbar gelagert. Durch das Verschwenken der Trennvorrichtung 28 kann ein Flächenverhältnis zwischen der ersten und der zweiten Teilzone 22a, 22b der Regenerationszone 22 variabel eingestellt werden.

Fig. 3 zeigt somit eine Abscheideeinheit 18 mit einer relativ einfach aufgebauten mechanischen Trennvorrichtung 28, die an einer Lagerung 30 im Endbereich schwenkbar gelagert ist. Die Lagerung 30 ist z. B. mit einem Antrieb gekoppelt, der beispielsweise über eine hinsichtlich der Austrittsfläche mittlere Ausgangstemperatur des ersten und/oder des zweiten Teilstroms 42, 44 gesteuert werden kann.

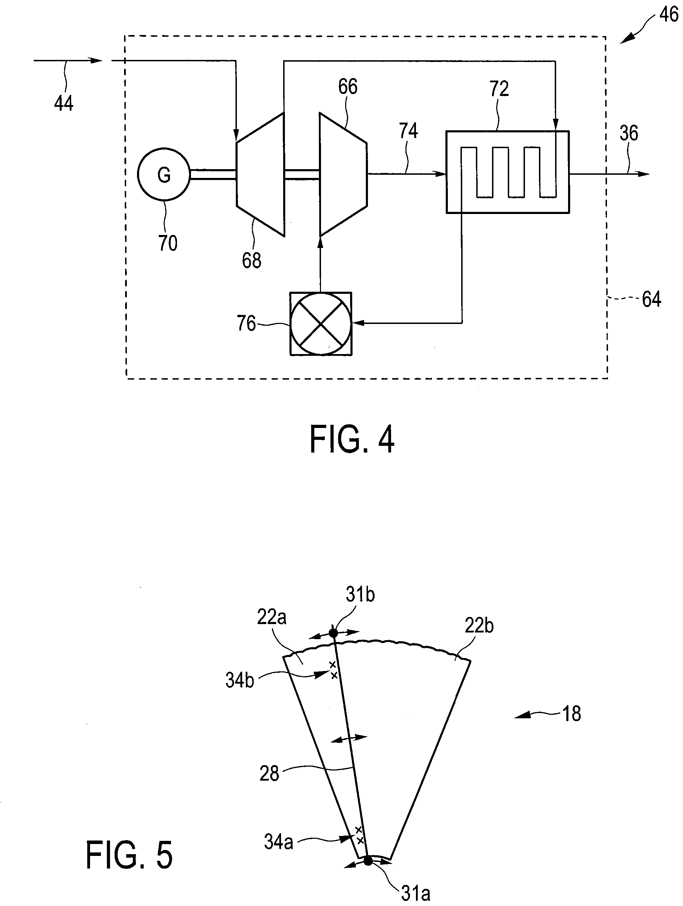

Fig. 5 zeigt ein weiteres Ausführungsbeispiel einer Trennvorrichtung 28 für die Abscheideeinheit 18 der Abscheideeinrichtung 12. In diesem Ausführungsbeispiel ist die Trennvorrichtung 28 in Form einer Trennwand an ihren beiden Endbereichen (oben und unten in Fig. 5) bewegbar bzw. verschiebbar gelagert. Die zwei Lagerungen 31, 31b sind jeweils mit einem Antrieb gekoppelt und bevorzugt unabhängig voneinander ansteuerbar. Außerdem sind entlang der Trennvorrichtung 28 vorzugsweise mehrere (bevorzugt wenigstens zwei, bevorzugter wenigstens vier) Temperatursensoren 34a, 34b vorgesehen, um die Austrittstemperaturen des ersten und/oder des zweiten Teilstroms 42, 44 als Regelparameter für die Trennvorrichtung 28 zu erfassen. Bei dieser Konfiguration besteht die Möglichkeit, die Trennvorrichtung 28 auf einer Linie einer im Wesentlichen gleichen Temperatur und damit bevorzugt auch einer im Wesentlich gleichen Verunreinigungskonzentration auszurichten. Die Verunreinigungskonzentration im zweiten Teilstrom 44 und damit die Effizienz der Reinigungseinrichtung 46 können so weiter erhöht werden.

Alternativ zu den Ausführungsformen der Fig. 3 oder Fig. 5 kann die Trennvorrichtung 28 beispielsweise auch als fächerartig, variabel ausspreizbarer Trennvorhang oder als variabel in Umfangsrichtung über einen definierten Winkelbereich aufspreizbare Lamellenvorrichtung ausgebildet sein.

In beiden Ausführungsformen der Fig. 3 und 5 können anstelle der Temperatur auch andere Parameter zum Regeln der Trennvorrichtung 28 verwendet werden. So können als Regelparameter vorzugsweise die Temperatur, die Verunreinigungskonzentration, der Volumenstrom und/oder der Druck des ersten und/oder des zweiten Teilstroms 42, 44 benutzt werden.

Wie ferner in Fig. 2 dargestellt, ist in der Drehrichtung 26 der Abscheideeinheit 18 zudem zwischen der Regenerationszone 22 und der Abscheidezone 20 eine Kühlzone 24 vorgesehen. Die Fläche dieser Kühlzone 24 ist deutlich kleiner bemessen als die Fläche der Abscheidezone 20, und vorzugsweise auch kleiner als die Fläche der Regenerationszone 22.

Die Kühlzone 24 der Abscheideeinrichtung 12 steht bevorzugt mit einem Anschluss 13c in Verbindung, über den der Abscheideeinrichtung 12 mittels eines Gebläses 52 ein Kühlluftstrom 50 zugeführt werden kann. Nach Durchströmen der Abscheideeinheit 18 wird der Kühlluftstrom 54 über einen Anschluss 13d aus der Abscheideeinrichtung 12 ausgeleitet. Wie beispielhaft in Fig. 1 dargestellt, wird der Kühlluftstrom 54 nach Durchströmen der Abscheideeinrichtung 12 der Prozessabluft 10 stromauf der Abscheideeinrichtung 12 zugeleitet. Alternativ oder ergänzend kann der Kühlluftstrom 50 auch als Teilstrom aus der Prozessabluft 10 abgetrennt oder von dieser abgeleitet werden. Dies ist insbesondere dann möglich, wenn der Ventilator 52 saugseitig betrieben wird und/oder der Ventilator 16 im Prozessabluftstrom 10 vorgesehen wird oder ist. In diesem Fall kann die Kühlluft bis auf eine Desorptionstemperatur aufgeheizt und vorzugsweise zur Regeneration der Abscheideeinrichtung 12 verwendet werden.

Der Kühlluftstrom 50 durchströmt die Abscheideeinrichtung 12 vorzugsweise in einer Richtung entgegengesetzt zu der Richtung, in welcher die Prozessabluft 10 die Abscheideeinrichtung 12 durchströmt. Der Kühlluftstrom 50 kühlt die Abscheideeinheit 18 der Abscheideeinrichtung 12 nach einem Regenerationsvorgang in der Regenerationszone 22 wieder auf einen Temperaturbereich von etwa 10 bis 60°C ab, in dem sich die in der Prozessabluft 10 enthaltenen Verunreinigungen an dem Filter 18 anlagern können.

Die Regenerationszone 22 der Abscheideeinrichtung 12 steht eingangsseitig mit einem Anschluss 13e zum Einleiten eines Regenerationsstroms 36 in Verbindung. Der Regenerationsstrom 36 ist vorzugsweise Heißluft, die mittels eines Wärmetauschers 40 auf eine Temperatur im Bereich von 140 bis 450°C gebracht und mittels eines Gebläses 38 in die Abscheideeinrichtung 12 geblasen wird.

Ausgangsseitig steht die Regenerationszone 22 mit zwei Anschlüssen 13f und 13g in Verbindung. Genauer steht die erste Teilzone 22a der Regenerationszone 22 mit dem Anschluss 13f zum Ausleiten eines ersten Teilstroms 42 in Verbindung und steht die zweite Teilzone 22b der Regenerationszone 22 mit dem Anschluss 13g zum Ausleiten eines zweiten Teilstroms 44 in Verbindung. Der Regenerationsstrom 36 durchströmt die Abscheideeinrichtung 12 vorzugsweise in einer Richtung entgegengesetzt zu der Richtung, in welcher die Prozessabluft 10 die Abscheideeinrichtung 12 durchströmt.

Nachdem sich die Verunreinigungen der Prozessabluft 10 in der relativ kühlen Abscheidezone 20 an der Abscheideeinheit 18 angelagert haben, wird die Abscheideeinheit 18 in der Regenerationszone 22 aufgeheizt, um die Verunreinigung wieder von der Abscheideeinheit 18 lösen zu können (Desorption). Da sich die Abscheideeinheit 18 in einer ersten Phase dieses Regenerationsvorganges noch auf einem niedrigen Temperaturniveau befindet (erste Teilzone 22a), werden nur wenige Verunreinigungen von dem Filter gelöst, sodass der erste Teilstrom 42 nur eine relativ geringe Verunreinigungskonzentration aufweist.

Aus diesem Grund wird dieser erste Teilstrom 42 von dem Regenerationsstrom abgetrennt, weshalb er auch als "Splitstrom" bezeichnet wird. In dem Ausführungsbeispiel von Fig. 1 wird der erste Teilstrom 42 der Prozessabluft 10 stromauf der Abscheideeinrichtung 12 zugeleitet und so letztlich zur Abscheideeinrichtung 12 rückgeführt. Auf diese Weise wird die Verunreinigungskonzentration in der Prozessabluft 10 erhöht, sodass auch die Verunreinigungskonzentration in der Abscheideeinheit 18 der Abscheideeinrichtung 12 erhöht werden kann.

Wie in Fig. 1 dargestellt, ist in der ersten Teilstromleitung optional ein Strömungsregler 60 vorgesehen. Von diesem Strömungsregler 60 führt eine Strömungsleitung 62 zum Kühlluftstrom 50 stromauf der Abscheideeinrichtung 12. Der Strömungsregler 60 ist bevorzugt variabel ansteuerbar.

Nachdem der Filter 18 der Abscheideeinrichtung 12 in der Regenerationszone 22 eine bestimmte Zeitdauer mit dem heißen Regenerationsstrom 36 beaufschlagt worden ist, erreicht die Abscheideeinheit 18 ein Temperaturniveau, das für eine Desorption der Verunreinigungen von der Abscheideeinheit 18 ausreichend ist (zweite Teilzone). Der zweite Teilstrom 44 des Regenerationsstroms 36 hat deshalb eine hohe Verunreinigungskonzentration, weshalb er auch als "Konzentratstrom" bezeichnet wird.

Der zweite Teilstrom 44 wird einer Reinigungseinrichtung 46 zugeführt, in welcher die Verunreinigungen (z. B. organischen Lösemittel) 48 aus dem zweiten Teilstrom 44 extrahiert bzw. zurückgewonnen werden. Bei der Reinigungseinrichtung 46 handelt es sich zum Beispiel um eine Vorrichtung zur regenerativen thermischen Oxidation (RTO). Die Effizienz einer solchen Reinigungseinrichtung 46 ist umso höher je höher die Verunreinigungskonzentration im zweiten Teilstrom 44 ist. Aus diesem Grund ist es von Vorteil, den ersten Teilstrom 42 mit einer relativ geringen Verunreinigungskonzentration abzutrennen.

Alternativ kann es sich bei der Reinigungseinrichtung 46 auch um eine solche mit einem Gasturbinenaggregat handeln. Eine solche ist beispielhaft in Fig. 4 veranschaulicht und zum Beispiel in der DE 10 2013 203 448 A1 beschrieben. Bei der Gasturbinenanlage handelt es sich grundsätzlich um ein Energieerzeugungssystem, welches in Kombination mit dem erfindungsgemäßen Verfahren zum Abtrennen von Verunreinigungen aus Prozessabluft als Reinigungseinrichtung 46 eingesetzt werden kann, in welcher der zweite Teilstrom 44 bzw. seine brennbaren Bestandteile verbrannt werden.

Wie in Fig. 4 dargestellt, weist diese Reinigungseinrichtung 46 ein Gasturbinenaggregat 64, insbesondere ein Mikrogasturbinenaggregat auf. Das Gasturbinenaggregat 64 enthält eine Gasturbine 66, die mit einem Verdichter 68 gekoppelt ist und die einen Generator 70 antreibt. Die Gasturbine 66 kann insbesondere als sogenannte Mikrogasturbine ausgebildet sein und den in der WO 2012/089837 A1 beschriebenen Aufbau haben. Mit dem Verdichter 68 wird der brennbare Bestandteile enthaltende zweite Teilstrom 44 angesaugt und verdichtet. Der angesaugte zweite Teilstrom 44 wird dann durch einen als Rekuperator 72 ausgebildeten Wärmetauscher geführt, in dem Wärme aus dem mit dem Pfeil 74 kenntlich gemachten Abgasstrom der Gasturbine 66 auf den verdichteten zweiten Teilstrom übertragen wird.

In der Verbrennungsanlage 76 wird der brennbare Bestandteile enthaltende zweite Teilstrom 44 zusammen mit Starkgas verbrannt. Brennbares Gas oder Gasgemisch, dessen Heizwert HA oberhalb von 15 MJ/m³ liegt, wird als sogenanntes Starkgas bezeichnet. Bei dem in der Verbrennungsanlage 76 verbrannten Starkgas kann es sich z. B. um Erdgas, insbesondere Bioerdgas handeln.

Durch die erhöhte Verunreinigungskonzentration des zweiten Teilstroms 44 kann das Gasturbinenaggregat 64 wahlweise auch ohne den Rekuperator 72 ausgeführt werden. So lässt sich ggf. vermeiden, dass das Vorwärmen von brennbare Bestandteile enthaltendem gasförmigem Medium in diesem chemische Vorreaktionen hervorruft, bevor es in den Brennraum eines Brenners gelangt.

Während in Fig. 1 ein geschlossener Regenerationskreis veranschaulicht ist, kann dieser in anderen Ausführungsformen auch offen ausgestaltet sein.

Wie in Fig. 1 dargestellt, ist in der zweiten Teilstromleitung stromab der Abscheideeinrichtung 12 ein Strömungsregler 56 angeordnet. Mit Hilfe dieses Strömungsreglers 56 können ein oder mehrere weitere Teilströme von dem zweiten Teilstrom 44 abgezweigt werden.

In Fig. 1 sind beispielhaft drei optionale weitere Teilströme vorgesehen. Ein weiterer Teilstrom kann über eine erste Strömungsleitung 58a dem Regenerationsstrom 36 stromauf der Abscheideeinrichtung 12 zugeleitet werden, ein weiterer Teilstrom kann über eine zweite Strömungsleitung 58b dem ersten Teilstrom 42 vor dessen Einleitung in die Prozessabluft 10 zugeleitet werden, und ein weiterer Teilstrom kann über eine dritte Strömungsleitung 58c der Prozessabluft 10 stromauf der Abscheideeinrichtung 12 zugeleitet werden.

Durch diese Maßnahmen können die Verunreinigungskonzentrationen in der Abscheideeinrichtung 12 und damit letztlich auch im zweiten Teilstrom 44 des Regenerationsstroms erhöht werden. Im Ergebnis kann die Reinigungseinrichtung 46 effizienter arbeiten. Gegebenenfalls kann die Reinigungseinrichtung 46 auf diese Weise autotherm, d. h. ohne zusätzliche Energiezufuhr arbeiten.

Mit dem in Fig. 1 veranschaulichten Aufbau lassen sich Aufkonzentrationsfaktoren für den zweiten Teilstrom 44 von bis zu 40:1 und mehr im Verhältnis zur Prozessabluft 10 erzielen. Derart hohe Aufkonzentrationen waren bisher nur mit mehrstufigen Abscheideeinrichtungen erreichbar.

Durch die höhere Temperatur des zweiten Teilstroms 44 (im Vergleich zu einer Situation ohne abgetrennten ersten Teilstrom 42) kann zudem der Taupunkt verschoben werden. Im Ergebnis kann die Reinigungseinrichtung 46 ebenfalls effizienter arbeiten.

Durch die Rückführung der abgezweigten weiteren Teilströme besteht zudem die Möglichkeit, eine sicherheitstechnische Fahrweise der Anlage zu erreichen, die im Störungsfall ein unzulässiges Ansteigen der Konzentration über die Explosionsgrenze verhindert. Eine Gefährdung der Betriebssicherheit der Reinigungseinrichtung kann so reduziert werden.

Als weiterer Vorteil kann zudem eine Pufferung von Konzentrationsspitzen ermöglicht werden.

Um den Betrieb der gesamten Anlage zu optimieren, können ein oder mehrere der folgenden Parameter überwacht werden: eine Temperatur des ersten Teilstroms 42, eine Verunreinigungskonzentration des ersten Teilstroms 42, eine Temperatur des zweiten Teilstroms 44, eine Verunreinigungskonzentration des zweiten Teilstroms 44, eine Temperatur der Prozessabluft 10, eine Verunreinigungskonzentration der Prozessabluft 10, ein Strömungsvolumen der Prozessabluft 10, eine Temperatur des Regenerationsstroms 36, ein Strömungsvolumen des Regenerationsstroms 36, eine Energiebilanz der Reinigungseinrichtung 46, ein Druck des ersten Teilstroms 42, ein Druck des zweiten Teilstroms 44, ein Volumenstrom des ersten Teilstroms 42, ein Volumenstrom des zweiten Teilstroms 44 und dergleichen. Die Trennvorrichtung 28 kann dann in Abhängigkeit von diesen Parametern variabel angesteuert werden, um ein Flächenverhältnis zwischen der ersten Teilzone 22a und der zweiten Teilzone 22b einzustellen. Auf diese Weise kann eine Strömungsmenge des ersten Teilstroms 42 variabel geregelt werden bzw. kann ein Strömungsmengenverhältnis des ersten Teilstroms 42 zum zweiten Teilstrom 44 variabel geregelt werden.

### BEZUGSZIFFERNLISTE

- 10: Prozessabluft
- 12: Abscheideeinrichtung
- 13a: Anschluss zum Einleiten der Prozessabluft
- 13b: Anschluss zum Ausleiten der Reinluft
- 13c: Anschluss zum Einleiten des Kühlluftstroms
- 13d: Anschluss zum Ausleiten des Kühlluftstroms
- 13e: Anschluss zum Einleiten des Regenerationsstroms
- 13f: Anschluss zum Ausleiten des ersten Teilstroms des Regenerationsstroms (Splitstrom)
- 13g: Anschluss zum Ausleiten des zweiten Teilstroms des Regenerationsstroms (Konzentratstrom)
- 14: Reinluft
- 16: Gebläse
- 18: Abscheideeinheit
- 20: Abscheidezone
- 22: Regenerationszone
- 22a: erste Teilzone von 22
- 22b: zweite Teilzone von 22
- 24: Kühlzone
- 26: Drehrichtung
- 28: Trennwand
- 30: Lagerung
- 31a, 31b: Lagerungen
- 32: Schwenkbereich
- 34a, 34b: Temperatursensoren
- 36: Regenerationsstrom
- 38: Gebläse
- 40: Wärmetauscher
- 42: erster Teilstrom (Splitstrom)
- 44: zweiter Teilstrom (Konzentratstrom)
- 46: Reinigungseinrichtung
- 48: Lösemittel
- 50: Kühlluftstrom
- 52: Gebläse
- 54: Kühlluftstrom nach Durchlaufen des Filters
- 56: Strömungsregler (Mehrwegeventil, Strömungsweiche)
- 58a: erste Strömungsleitung
- 58b: zweite Strömungsleitung
- 58c: dritte Strömungsleitung
- 60: Strömungsregler
- 62: Strömungsleitung
- 64: Gasturbinenaggregat
- 66: Gasturbine
- 68: Verdichter
- 70: Generator
- 72: Rekuperator
- 74: Abgasstrom
- 76: Verbrennungsanlage

## Patentansprüche

1. Verfahren zum Abtrennen von Verunreinigungen aus Prozessabluft, mit den Schritten:
- Leiten einer Prozessabluft (10) durch eine Abscheideeinrichtung (12) hindurch; und
- Regenerieren der Abscheideeinrichtung (12) durch Hindurchleiten eines Regenerationsstroms (36),
**gekennzeichnet durch** die weiteren Schritte:
- Trennen des beim Regenerieren durch die Abscheideeinheit (18) der Abscheideeinrichtung (12) hindurch geströmten Regenerationsstroms (36) in einen ersten Teilstrom (42), der eine Verunreinigungskonzentration kleiner als ein erster vorbestimmter Grenzwert aufweist, und einen zweiten Teilstrom (44), der eine Verunreinigungskonzentration gleich oder größer als ein zweiter vorbestimmter Grenzwert aufweist, wobei der zweite vorbestimmte Grenzwert gleich oder größer als der erste vorbestimmte Grenzwert ist;
- Rückführen des beim Regenerieren erzeugten ersten Teilstroms (42) stromauf der Abscheideeinrichtung (12) in die Prozessabluft (10); und
- Leiten des beim Regenerieren erzeugten zweiten Teilstroms (44) zu einer Reinigungseinrichtung (46),
wobei eine Strömungsmenge des beim Regenerieren erzeugten ersten Teilstroms (42) und/oder ein Verhältnis der Strömungsmenge des beim Regenerieren erzeugten ersten Teilstroms (42) zur Strömungsmenge des beim Regenerieren erzeugten zweiten Teilstroms (44) variabel geregelt werden.

2. Verfahren nach Anspruch 1, **dadurch gekennzeichnet, dass** die Abscheideeinrichtung (12) zwischen dem Regenerieren und einem nächsten Abreinigen der Prozessabluft (10) mittels eines Kühlluftstroms (50) gekühlt wird und der beim Regenerieren erzeugte erste Teilstrom (42) dem Kühlluftstrom (50) stromauf der Abscheideeinrichtung (12) zugeleitet wird.

3. Verfahren nach Anspruch 1 oder 2, **dadurch gekennzeichnet, dass** von dem beim Regenerieren erzeugten zweiten Teilstrom (44) ein weiterer Teilstrom abgezweigt und der Abscheideeinrichtung (12) zurückgeführt wird.

4. Verfahren nach Anspruch 3, **dadurch gekennzeichnet, dass** der abgezweigte weitere Teilstrom dem ersten Teilstrom (42), der Prozessabluft (10) und/oder dem Regenerationsstrom (36) zugeleitet wird.

5. Verfahren nach einem der Ansprüche 1 bis 4, **dadurch gekennzeichnet, dass** die Abscheideeinrichtung (12) kontinuierlich betrieben wird.

6. Regenerative Abscheideeinrichtung (12) zum Abtrennen von Verunreinigungen aus Prozessabluft, aufweisend:
- einen Anschluss (13a) zum Einleiten einer Prozessabluft (10) ;
- eine Abscheideeinheit (18) zum Aufnehmen der Verunreinigungen aus der in die Abscheideeinrichtung (12) eingeleiteten Prozessabluft (10);
- einen Anschluss (13b) zum Ausleiten von Reinluft (14); und
- einen Anschluss (13e) zum Einleiten eines Regenerationsstroms (36),
**dadurch gekennzeichnet, dass** die Abscheideeinrichtung (12) ferner aufweist:
- eine Trenneinrichtung (28) zum Trennen des durch die Abscheideeinheit (18) hindurch geströmten Regenerationsstroms (36) in einen ersten Teilstrom (42), der eine Verunreinigungskonzentration kleiner als ein erster vorbestimmter Grenzwert aufweist, und einen zweiten Teilstrom (44), der eine Verunreinigungskonzentration gleich oder größer als ein zweiter vorbestimmter Grenzwert aufweist, wobei der zweite vorbestimmte Grenzwert gleich oder größer als der erste vorbestimmte Grenzwert ist;
- einen Anschluss (13f) zum Ausleiten des ersten Teilstroms (42) ;
- eine Strömungsleitung zum Rückführen des bei einem Regenerationsvorgang erzeugten ersten Teilstroms (42) stromauf des Anschlusses (13a) zum Einleiten einer Prozessabluft in die Prozessabluft (10); und
- einen Anschluss (13g) zum Ausleiten des zweiten Teilstroms (44),
wobei die Trennvorrichtung (28) ausgestaltet ist, um eine Strömungsmenge des ersten Teilstroms (42) variabel zu regeln.

7. Abscheideeinrichtung nach Anspruch 6, **dadurch gekennzeichnet, dass** die Abscheideeinheit (18) als ein Rotor ausgestaltet ist, dessen Stirnseiten fortlaufend mit der Prozessabluft (10) und dem Regenerationsstrom (36) beaufschlagt werden.

8. Abscheideeinrichtung nach Anspruch 7, dadurch gekenzeichnet, dass sie eine sektorförmige Abscheidezone (20) und eine sektorförmige Regenerationszone (22) aufweist, wobei die Abscheidezone (20) und die Regenerationszone (22) einander nicht überlappen, und die Trennvorrichtung (28) die Regenerationszone (22) in einer Drehrichtung (26) der Abscheideeinheit (18) in eine erste Teilzone (22a) und eine zweite Teilzone (22b) unterteilt.

9. Abscheideeinrichtung nach einem der Ansprüche 6 bis 8, **dadurch gekennzeichnet, dass** sie ferner einen Anschluss (13c) zum Einleiten eines Kühlluftstroms (50) und einen Anschluss (13d) zum Ausleiten des Kühlluftstroms (54) nach Durchströmen der Abscheideeinheit (18) aufweist.

10. Anlage zum Abtrennen von Verunreinigungen aus Prozessabluft, aufweisend:
- eine regenerative Abscheideeinrichtung (12) nach einem der Ansprüche 6 bis 9; und
- eine Reinigungseinrichtung (46) zum Extrahieren der Verunreinigungen (48) aus dem bei einem Regenerationsvorgang der Abscheideeinrichtung (12) erzeugten zweiten Teilstrom (44).

11. Anlage nach Anspruch 10, **dadurch gekennzeichnet, dass** sie einen Strömungsregler (56) zum Abzweigen eines weiteren Teilstroms von dem bei einem Regenerationsvorgang erzeugten zweiten Teilstrom (44) und wenigstens eine Strömungsleitung (58a, 58b, 58c) zum Rückführen des weiteren Teilstroms zur Abscheideeinrichtung (12) aufweist.

12. Anlage nach Anspruch 10 oder 11, **dadurch gekennzeichnet, dass** die Reinigungseinrichtung (46) ausgestaltet ist zur regenerativen thermischen Oxidation (RTO), direkten thermischen Oxidation (TO), rekuperativen katalytischen Oxidation (CO), regenerativen katalytischen Oxidation (RCO), Kondensation oder ein Gasturbinenaggregat (64) mit einer Verbrennungsanlage (76) zum Verbrennen der des zweiten Teilstroms (44) aufweist.

## Claims

1. A method for separating impurities from process exhaust air, comprising the steps of:
- passing a process exhaust air (10) through a separating device (12); and
- regenerating said separating device (12) by passing a regeneration stream (36) therethrough,
**characterized by** the further steps of:
- dividing said regeneration stream (36) having passed through the separating unit (18) of said separating device (12) during regeneration into a first partial stream (42) having an impurity concentration less than a first predetermined threshold, and a second partial stream (44) having an impurity concentration equal to or greater than a second predetermined threshold, said second predetermined threshold being equal to or greater than said first predetermined threshold;
- returning said first partial stream (42) generated during regeneration into said process exhaust air (10) upstream of said separating device (12); and
- feeding said second partial stream generated during regeneration to a cleaning device (46),
wherein a flow amount of said first partial stream (42) generated during regeneration and/or a ratio of the flow amount of said first partial stream (42) generated during regeneration to the flow amount of said second partial stream (44) generated during regeneration are controlled variably.

2. The method according to claim 1, **characterized in that** said separating device (12) is cooled between the regeneration and a next cleaning of said process exhaust air (10) by means of a cooling airflow (50), and said first partial stream (42) generated during regeneration is fed into said cooling airflow (50) upstream of said separating device (12).

3. The method according to claim 1 or 2, **characterized in that** a further partial stream is branched-off from said second partial stream (44) generated during regeneration and returned to said separating device (12).

4. The method according to claim 3, **characterized in that** said branched-off further partial stream is fed into said first partial stream (42), said process exhaust air (10) and/or said regeneration stream (36).

5. The method according to any one of claims 1 to 4, **characterized in that** said separating device (12) is operated continuously.

6. A regenerative separating device (12) for separating impurities from process exhaust air, comprising:
- a port (13a) for introducing a process exhaust air (10);
- a separation unit (18) for receiving the impurities from said process exhaust air introduced into said separating device (12);
- a port (13b) for discharging clean air (14); and
- a port (13e) for introducing a regeneration stream (36),
**characterized in that** said separating device (12) further comprises:
- a dividing means (28) for dividing said regeneration stream (36) having passed through said separation unit (18) into a first partial stream (42) having an impurity concentration less than a first predetermined threshold and a second partial stream (44) having an impurity concentration equal to or greater than a second predetermined threshold, wherein said second predetermined threshold is equal to or greater than said first predetermined threshold;
- a port (13f) for discharging said first partial stream (42);
- a flow line for returning said first partial stream (42) generated during a regeneration process into said process exhaust air (10) upstream of said port (13a) for introducing a process exhaust air; and
- a port (13g) for discharging said second partial stream (44),
wherein said dividing means (28) is configured to variably control a flow amount of said first partial stream (42).

7. The separation device according to claim 6, **characterized in that** said separation unit (18) is designed as a rotor whose end faces are continuously loaded by said process exhaust air (10) and said regeneration stream (36).

8. The separating device according to claim 7, **characterized in that** it comprises a sector-shaped separation zone (20) and a sector-shaped regeneration zone (22), wherein said separation zone (20) and said regeneration zone (22) do not overlap each other, and said dividing means (28) divides said regeneration zone (22) into a first subzone (22a) and a second subzone (22b) in a direction of rotation (26) of said separation unit (18).

9. The separating device according to any one of claims 6 to 8, **characterized in that** it further comprises a port (13c) for introducing a cooling air flow (50) and a port (13d) for discharging said cooling air flow (54) after passing through said separation unit (18).

10. A system for separating impurities from process exhaust air, comprising:
- a regenerative separating device (12) according to any one of claims 6 to 9; and
- a cleaning device (46) for extracting the impurities (48) from said second partial stream (44) generated during a regeneration process of said separating device (12).

11. The system according to claim 10, **characterized in that** it comprises a flow controller (56) for branching off a further partial stream from said second partial stream (44) generated during a regeneration process, and at least one flow line (58a, 58b, 58c) for returning said further partial stream to said separating device (12).

12. The system according to claim 10 or 11, **characterized in that** said cleaning device (46) is configured for regenerative thermal oxidation (RTO), direct thermal oxidation (TO), recuperative catalytic oxidation (CO), regenerative catalytic oxidation (RCO), condensation or comprises a gas turbine aggregate (64) having a combustion apparatus (76) for combusting said second partial stream (44).

## Revendications

1. Procédé de séparation d'impuretés de l'air d'évacuation de processus, avec les étapes de :
- passage d'un air d'évacuation de processus (10) à travers un dispositif de séparation (12) ; et
- régénération du dispositif de séparation (12) par passage à travers d'un flux de régénération (36),
**caractérisé par** les autres étapes de :
- séparation du flux de régénération (36) écoulé à travers l'unité de séparation (18) du dispositif de séparation (12) lors de la régénération en un premier flux partiel (42), qui présente une concentration en impuretés inférieure à une première valeur limite prédéterminée, et un deuxième flux partiel (44), qui présente une concentration en impuretés égale ou supérieure à une deuxième valeur limite prédéterminée, dans lequel la deuxième valeur limite prédéterminée est égale ou supérieure à la première valeur limite prédéterminée ;
- retour du premier flux partiel généré lors de la régénération (42) en amont du dispositif de séparation (12) dans l'air d'évacuation de processus (10) ; et
- amenée du deuxième flux partiel généré lors de la régénération(44) vers un dispositif de nettoyage(46),
dans lequel un débit du premier flux partiel généré lors de la régénération (42) et/ou un rapport entre le débit du premier flux partiel généré lors de la régénération (42) et le débit du deuxième flux partiel généré lors de la régénération (44) sont régulés de manière variable.

2. Procédé selon la revendication 1, **caractérisé en ce que** le dispositif de séparation (12) est refroidi entre la régénération et un prochain nettoyage de l'air d'évacuation de processus (10) au moyen d'un flux d'air de refroidissement (50) et le premier flux partiel généré lors de la régénération (42) est amené au flux d'air de refroidissement (50) en amont du dispositif de séparation (12).

3. Procédé selon la revendication 1 ou 2, **caractérisé en ce qu'**un autre flux partiel est dérivé du deuxième flux partiel généré lors de la régénération (44) et ramené au dispositif de séparation (12).

4. Procédé selon la revendication 3, **caractérisé en ce que** l'autre flux partiel dérivé est amené au premier flux partiel (42), à l'air d'évacuation de processus (10) et/ou au flux de régénération (36).

5. Procédé selon l'une quelconque des revendications 1 à 4, **caractérisé en ce que** le dispositif de séparation (12) fonctionne en continu.

6. Dispositif de séparation régénérative (12) pour la séparation d'impuretés de l'air d'évacuation de processus, présentant :
- un raccord (13a) pour l'introduction d'un air d'évacuation de processus (10) ;
- une unité de séparation (18) pour la réception des impuretés de l'air d'évacuation de processus (10) introduit dans le dispositif de séparation (12) ;
- un raccord (13b) pour l'évacuation d'air pur (14) ; et
- un raccord(13e) pour l'introduction d'un flux de régénération(36),
**caractérisé en ce que** le dispositif de séparation (12) présente en outre :
- un dispositif de séparation (28) pour la séparation du flux de régénération (36) écoulé à travers l'unité de séparation (18) en un premier flux partiel (42), qui présente une concentration en impuretés inférieure à une première valeur limite prédéterminée, et un deuxième flux partiel (44), qui présente une concentration en impuretés égale ou supérieure à une deuxième valeur limite prédéterminée, dans lequel la deuxième valeur limite prédéterminée est égale ou supérieure à la première valeur limite prédéterminée ;
- un raccord (13f) pour l'évacuation du premier flux partiel (42) ;
- une conduite d'écoulement pour le retour du premier flux partiel généré lors d'un processus de régénération (42) en amont du raccord (13a) pour l'introduction d'un air d'évacuation de processus dans l'air d'évacuation de processus (10) ; et
- un raccord (13g) pour l'évacuation du deuxième flux partiel(44),
dans lequel le dispositif de séparation (28) est configuré pour réguler de manière variable un débit du premier flux partiel (42).

7. Dispositif de séparation selon la revendication 6, **caractérisé en ce que** l'unité de séparation (18) est configurée en tant que rotor, dont les côtés avant sont alimentés en continu en air d'évacuation de processus (10) et en flux de régénération (36).

8. Dispositif de séparation selon la revendication 7, **caractérisé en ce qu'**il présente une zone de séparation en forme de secteur (20) et une zone de régénération en forme de secteur (22), dans lequel la zone de séparation (20) et une zone de régénération (22) ne se chevauchent pas l'une l'autre, et le dispositif de séparation (28) subdivise la zone de régénération (22) dans un sens de rotation (26) de l'unité de séparation (18) en une première zone partielle (22a) et une deuxième zone partielle (22b).

9. Dispositif de séparation selon l'une quelconque des revendications 6 à 8, **caractérisé en ce qu'**il présente en outre un raccord (13c) pour l'introduction d'un flux d'air de refroidissement (50) et un raccord (13d) pour l'évacuation du flux d'air de refroidissement (54) après écoulement à travers l'unité de séparation (18).

10. Installation de séparation d'impuretés de l'air d'évacuation de processus, présentant:
- un dispositif de séparation régénérative (12) selon l'une quelconque des revendications 6 à 9 ; et
- un dispositif de nettoyage (46) pour l'extraction des impuretés (48) du deuxième flux partiel (44) généré lors d'un processus de régénération du dispositif de séparation (12).

11. Installation selon la revendication 10, **caractérisée en ce qu'**elle présente un régulateur de débit (56) pour la dérivation d'un autre flux partiel du deuxième flux partiel généré lors d'un processus de régénération (44) et au moins une conduite d'écoulement (58a, 58b, 58c) pour le retour de l'autre flux partiel vers le dispositif de séparation (12).

12. Installation selon la revendication 10 ou 11, **caractérisée en ce que** le dispositif de nettoyage (46) est configuré pour l'oxydation thermique régénérative (RTO), l'oxydation thermique directe (TO), l'oxydation catalytique récupérative (CO), l'oxydation catalytique régénérative (RCO), la condensation ou un groupe de turbines à gaz (64) avec une installation de combustion (76) pour la combustion du deuxième flux partiel (44).
